# EUROPEAN PATENT SPECIFICATION

(11) **EP 1 603 388 B1**
(45) Date of publication and mention of the grant of the patent: **16.05.2007**
(21) Application number: 04710811.3
(22) Date of filing: 13.02.2004
(51) Int. Cl.: A01N 25/04, A01N 41/10, A01N 37/22, A01N 43/70

(54) **HERBICIDAL SUSPOEMULSION**
HERBIZIDE SUSPOEMULSION
SUSPENSION-EMULSION HERBICIDE

(30) Priority: 12.03.2003 GB 0305679
(43) Date of publication of application: 14.12.2005
(73) Proprietor: Syngenta Participations AG, 4058 Basel (CH)
(72) Inventor: CUSH, Sarah Beth, Syngenta Crop Protection, Inc., Greensboro, NC 27409 (US); HOPKINSON, M. J., Syngeta Crop Protection, Inc., Greensboro, NC 27409 (US)
(74) Representative: Swift, Jane Elizabeth Berrisford
(86) International application number: PCT/EP2004/001377
(87) International publication number: WO 2004/080178

(56) References cited:
- WO-A-99/40784
- US-A- 4 372 777
- DATABASE COMPENDEX [Online] ENGINEERING INFORMATION, INC., NEW YORK, NY, US; UTZ C G ET AL: "Using nonionic surfactants in aqueous formulations" Database accession no. EIX93101629874 XP002100289 & SYMPOSIUM ON PESTICIDE FORMULATIONS AND APPLICATION SYSTEMS;SAN DIEGO, CA, USA OCT 16-17 1991, no. 1146, 16 October 1991 (1991-10-16), pages 133-144, ASTM Spec Tech Publ;ASTM Special Technical Publication 1993 Publ by ASTM, Philadelphia, PA, USA

## Description

The present invention relates to a novel agrochemical formulation comprising at least two active ingredients and the use thereof.

Agricultural pesticide manufacturers have identified the need for broad-spectrum pesticidal products. Single active ingredient formulations rarely meet such broad-spectrum requirements, and thus combination products, perhaps containing up to four complementary biologically active ingredients, have been developed. Such products have several additional advantages e.g. elimination of tank mixing; reduction in inventory products; saving in time and money; and a reduction in the number of times the crop is sprayed.

The development of such products is relatively simple providing that the active ingredients to be combined are physically, chemically and biologically compatible. In these situations the active ingredients can be combined in a broad range of formulation types well known in the art. Where the active ingredients are not physically, chemically and/or biologically compatible, it has been necessary to develop novel formulations to overcome the problems associated with such incompatibilities. One example of a formulation type is the so-called 'suspoemulsion' formulation. These suspoemulsion formulations are formed by combining an emulsion phase, containing one or more active ingredients, with a continuous phase also containing one or more active ingredients in the form of a solid dispersion. This type of formulation has several user advantages related to ease of transportation, storage and field application.

However, the formation of such suspoemulsion formulations is rarely straightforward. The technical challenge and complexity to formulate suspoemulsion formulations with satisfactory physical and chemical stability has been previously reported (e.g. Suspoemulsion Technology and Trends, Joseph R. Winkle, Pesticide Formulation and Adjuvant Technology, CRC Press, 1996).

Particular problems were encountered when attempting to formulate the active ingredients of the present invention into a suspoemulsion. One of the preferred active ingredients used is mesotrione (2-(2'-nitro-4'-methylsulphonylbenzoyl)-1,3-cyclohexanedione), which may be present either as the free acid, or as a metal salt. Mesotrione free acid is chemically unstable in aqueous medium under a range of pH conditions and/or concentration. The problem of the chemical instability may be overcome by chelating the mesotrione free acid with a metal chelating agent, for example a copper or zinc salt. However, the introduction of the metal salt into the composition surprisingly led to severe complications with the physical stability of the resulting suspoemulsion. It was noted that the chelated mesotrione particles were migrating into the emulsion phase - a phenomenon known as heteroflocculation/coagulation. Depending on the surfactant system, this heteroflocculation/coagulation could happen instantaneously on a macroscopic scale or very slowly, only under stress at a microscopic scale. This was considered very abnormal behaviour as it appeared that the event was not just a flocculation (surface to surface) event, but rather an actual migration of the mesotrione to the inside of the emulsion droplet.

It is therefore an object of the present invention to provide a chemically and physically stable suspoemulsion formulation that comprises a 2-(substituted benzoyl)-1,3-cyclohexanedione herbicide as one of the active ingredients.

Accordingly, a first aspect of the invention provides a suspoemulsion formulation comprising:
(a) a continuous phase comprising
   (i) one or more block co-polymers selected from the group consisting of alkyleneoxide copolymers (such as ethylene oxide-propylene oxide block copolymers, ethylene oxide-butylene oxide block copolymers), C₂₋₆ alkyl adducts of ethylene oxide-propylene oxide block copolymers, C₂₋₆ alkyl adducts of ethylene oxide-butylene oxide block copolymers, polyoxyethylene-polyoxypropylene monoalkylethers such as butyl ether, methyl ether, propyl ether, ethyl ether, or mixtures thereof, and
   (ii) one or more non-ionic surfactants selected from the group consisting of EO-PO block copolymers, butoxy block copolymers, graft comb polymers, polyethylene glycol mono and diesters, polyglyceryl alcohol ethers, alkyl ethoxylates, tristyryl ethoxylates, alkyl aryl ethoxylates and alkylpolyglycosides;
(b) a dispersed emulsion phase comprising
   (i) a chloroacetamide, and
   (ii) a polymeric stabiliser having a molecular weight between 10,000 and 1,000,000 daltons and selected from the group consisting of polypropylene, polyisobutylene, polyisoprene, copolymers of monoolefins and diolefins, polyacrylates, polystyrene, polyvinyl acetate, polyurethanes and polyamides; and
(c) a dispersed solid phase comprising
   (i) a 2-(substituted benzoyl)-1,3-cyclohexanedione herbicide; and
   (ii) a stabilising metal salt.

The suspoemulsion formulation of the present invention may optionally further comprise one or more additional active ingredients. The one or more additional active ingredients may be a pesticide, for example a herbicide, fungicide, insecticide or the like; or the additional active ingredient may be a compound selected from the class of compounds known as safeners or antidotes. The concentration of additional active ingredient in the formulation is suitably in the range of from 1 g/l to 500 g/l, and preferably from 2 g/l to 300g/l.

In one preferred embodiment, the suspoemulsion formulation further comprises an additional active ingredient which is a herbicide, for example a herbicide selected from the class known as triazines, for example atrazine or terbuthylazine; a phosphonate herbicide, for example glyphosate or salts thereof; or a phosphinate herbicide, such as glufosinate or salts thereof The concentration of additional herbicide is suitably in the range of from 5 g/l to 500 g/l, and preferably from 10 g/l to 300 g/l. Most preferably, the additional herbicide is a triazine, preferably atrazine or terbuthylazine. Suitably, the additional herbicide is present in the dispersed solid phase of the suspoemulsion.

In a second preferred embodiment, the suspoemulsion formulation further comprises an additional active ingredient selected from the class of compounds known as safeners or antidotes, for example benoxacor. The concentration of safener is suitably in the range of from 1 g/l to 100 g/l, and preferably from 2 g/l to 40 g/l. Suitably, the safener is present in the dispersed emulsion phase of the suspoemulsion.

In a third preferred embodiment, the suspoemulsion formulation further comprises at least two additional active ingredients, wherein at least one of the additional active ingredients is a herbicide, for example a triazine, such as atrazine or terbuthylazine, and at least one of the other additional active ingredients is a safener, for example benoxacor.

The continuous phase may be any suitable solvent, for example water, glycol or alcohol, but is preferably water.

Suitably, the concentration of block copolymer in the suspoemulsion formulation of the invention is from 0.1 to 10.0%, and preferably from 0.2 to 7.0%.

Suitably, the concentration of non-ionic surfactant in the suspoemulsion formulation of the invention is from 0.2 to 15.0%, and preferably from 0.5 to 10.0%.

Examples of the chloroacetamide suitable for use in the present invention include compounds of formula (I) 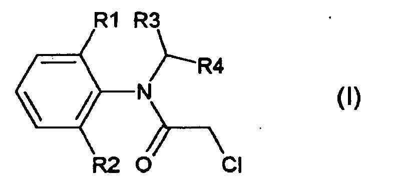 wherein R¹ is hydrogen, methyl or ethyl; R² is hydrogen or ethyl; R³ is hydrogen or methyl; and R⁴ is methyl, methoxy, methoxymethyl, ethoxy, or butoxy. Suitably, the chloroacetamide is selected from the group consisting of metolachlor, acetochlor and alachlor, preferably metolachlor, and most preferably, s-metolachlor. Suitably, the concentration of chloroacetamide in the suspoemulsion formulation is from 100 to 750 g/l, more suitably from 250 to 500 g/l.

Examples of suitable polymeric stabilizers that may be used in the present invention have a molecular weight between 10,000 and 1,000,000 daltons and include, but are not limited to polypropylene, polyisobutylene, polyisoprene, copolymers of monoolefins and diolefins, polyacrylates, polystyrene, polyvinyl acetate, polyurethanes or polyamides. Suitably, the concentration of polymeric stabilizer in the suspoemulsion formulation of the invention is from 0.1 to 7.0%, and preferably from 0.2 to 4.0%.

Suitably, the 2-(substituted benzoyl)- 1,3 -cyclohexanedione for use in the present invention is a compound of formula (II) 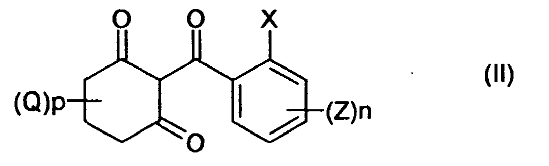 wherein
X represents a halogen atom; a straight- or branched-chain alkyl or alkoxy group containing up to six carbon atoms which is optionally substituted by one or more groups -OR⁵ or one or more halogen atoms; or a group selected from nitro, cyano,-CO₂R⁶ , -S(O)ₘR⁵, -O(CH₂)ᵣOR⁵, -COR⁶, -NR⁶R⁷, -SO₂NR⁶R⁷, -CONR⁶R⁷, -CSNR⁶R⁷ and -OSO₂R⁸;
R⁵ represents a straight- or branched-chain alkyl group containing up to six carbon atoms which is optionally substituted by one or more halogen atoms;
R⁶ and R⁷ each independently represents a hydrogen atom; or a straight- or branched-chain alkyl group containing up to six carbon atoms which is optionally substituted by one or more halogen atoms;
R⁸ represents a straight-or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)ₘR⁹, OS(O)ₘR⁹, C₁₋₆ alkyl, C₁₋₆ alkoxy, C₁₋₆ haloalkyl, C₁₋₆ haloalkoxy, carboxy, C₁₋₆ alkylcarbonyloxy, C₁₋₆ alkoxycarbonyl, C₁₋₆ alkylcarbonyl, amino, C₁₋₆ alkylamino, C₁₋₆ dialkylamino having independently the stated number of carbon atoms in each alkyl group, C₁₋₆ alkylcarbonylamino, C₁₋₆ alkoxycarbonylamino, C₁₋₆ alkylaminocarbonylamino, C₁₋₆ dialkylaminocarbonylamino having independently the stated number of carbon atoms in each alkyl group, C₁₋₆ alkoxycarbonyloxy, C₁₋₆ alkylaminocarbonyloxy, C₁₋₆ dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R⁹ represents cyano, -COR¹⁰, -CO₂R¹⁰ or -S(O)ₘR¹¹;
R¹⁰ represents hydrogen or straight- or branched-chain alkyl group containing up to six carbon atoms;
R¹¹ represents C₁₋₆ alkyl, C₁₋₆ haloalkyl, C₁₋₆ cyanoalkyl, C₃₋₈ cycloalkyl optionally substituted with halogen, cyano or C₁₋₄ alkyl; or phenyl optionally substituted with one to three of the same or different halogen, nitro, cyano, C₁₋₄ haloalkyl, C₁₋₄ alkyl, C₁₋₄ alkoxy or -S(O)ₘR¹²_{;}
R¹² represents C₁₋₄ alkyl;
each Q independently represents C₁₋₄ alkyl or -CO₂R¹³ wherein R¹³ is C₁₋₄ alkyl;
m is zero, one or two;
n is zero or an integer from one to four;
r is one, two or three; and
p is zero or an integer from one to six.

Suitably, X is chloro, bromo, nitro, cyano, C₁₋₄ alkyl, -CF₃, -S(O)ₘR⁵, or -OR⁵; each Z is independently chloro, bromo, nitro, cyano, C₁₋₄ alkyl, -CF₃, -OR⁵, -OS(O)ₘR⁹ or -S(O)ₘR⁹; n is one or two; and p is zero.

Preferably, the 2-(substituted benzoyl)-1,3-cyclohexanedione of formula (II) is selected from the group consisting of 2-(2'-nitro-4'-methylsulphonylbenzoyl)-1,3-cyclohexanedione, 2-(2'-nitro-4'-methylsulphonyloxybenzoyl)-1,3-cyclohexanedione, 2-(2'-chloro-4'-methylsulphonylbenzoyl)-1,3-cyclohexanedione, 4,4-dimethyl-2-(4-methanesulphonyl-2-nitrobenzoyl)-1,3-cyclohexanedione, 2-(2-chloro-3-ethoxy-4-methanesulphonylbenzoyl)-5-methyl-1,3-cyclohexanedione and 2-(2-chloro-3-ethoxy-4-ethanesulphonylbenzoyl)-5-methyl-1,3-cyclohexanedione; most preferably is 2-(2'-nitro-4'-methylsulphonyl benzoyl)-1,3-cyclohexanedione.

Suitably, the concentration of the 2-(substituted benzoyl)-1,3-cyclohexanedione in the suspoemulsion formulation of the present invention is from 10 to 100 g/l, more suitably 25 to 60 g/l.

Examples of suitable stabilizing metal salts that may be used include calcium, beryllium, barium, titanium, magnesium, manganese, zinc, iron, cobalt, nickel and copper salts; most suitable are magnesium, manganese, zinc, iron, cobalt, nickel and copper salts; especially preferred is a copper salt, for example copper hydroxide. Suitably, the concentration of stabilizing metal salts in the suspoemulsion formulation of the invention is from 0.01 to 4.0%, and preferably from 0.02 to 1.5%.

In a further aspect of the invention, there is provided a method for controlling the growth of undesirable vegetation such as weeds, which may be present around the locus of a desired plant species (which may or may not exhibit resistance, either by natural means or by genetic modification, to one or more herbicides), e.g. a crop such as corn, which comprises applying the formulation of the invention to the locus of such undesirable vegetation. Alternatively, in a further aspect of the invention, there is provided the use of the formulation of the invention for the control of undesirable vegetation. Examples of undesirable vegetation include, but are not limited to, velvetleaf, redroot pigweed, common water hemp, Palmer amaranth, ivyleaf morning glory, prickly sida, giant ragweed, common ragweed, common cocklebur, Eastern black nightshade, common lambsquarters, Pennsylvania smartweed, common sunflower, jimsonweed, hemp sesbania, toothed spurge, common purslane, large crabgrass, yellow foxtail and kochia. The weeds may or may not demonstrate resistance (either naturally or genetically modification) to one or more herbicides. The suspoemulsion formulation may be applied pre-emergence or post-emergence of the crop. Preferably, the formulation is applied pre-emergent. The formulation may be applied by air or on the ground by known techniques, such as hydraulic nozzle spray.

One advantage of the suspoemulsion formulation of the present invention is that, under the majority of conditions, season-long control of weeds is obtained by just one application of the formulation.

The present invention will now be described by way of example only.

### EXAMPLE 1

### 1.1 Preparation of Premixes

### 1.1.1 Preparation of S-metolachlor EW

| | % wt |
|---|---|
| S-metolachlor *[(b)(i)]* | 66.67 |
| A herbicidal antidote such as benoxacor | 3.33 |
| A polymer such as Polystyrene *[(b)(ii)]* | 4.18 |
| A block copolymer such as Pluronic P65 *[(a)(i)]* | 2.13 |
| Silicone antifoaming agent | 0.18 |
| Water | 23.51 |

The polystyrene and benoxacor are dissolved in the s-Metolachlor.

The Pluronic P65 is dissolved in the aqueous phase and the antifoam is added. The two are combined in such a way as to form an emulsified organic phase with a particle size of 1 - 40 microns.

### 1.1.2 Preparation of Mesotrione Millbase

| | %wt |
|---|---|
| Mesotrione *[(c)(i)]* | 35.00 |
| A non-ionic surfactant such as Tristyryl phenol with 16 moles of EO *[(a)(ii)]* | 2.89 |
| Acetic acid (56%) | 11.01 |
| Copper hydroxide (100%) *[(c)(ii)]* | 3.50 |
| Silicone antifoaming agent | 0.10 |
| Xanthan gum | 0.10 |
| Water | 47.40 |

Mix together the water, acetic acid and copper hydroxide. Add the mesotrione. The non-ionic surfactant, antifoaming agent, and xanthan gum are added and mixed until uniform. Mill until the median particle size is 1-6 microns.

### 1.2 Preparation of Final Product

| | % wt |
|---|---|
| S-Metolachlor EW | 55.20 |
| Mesotrione millbase | 10.50 |
| Ethylene glycol | 3.00 |
| A non-ionic surfactant such as a C₉-C₁₁ alkylpolyglycoside *[(a)(ii)]* | 6.00 |
| A block copolymer such as a butyl PO/EO surfactant *[(a)(i)]* | 5.00 |
| Xanthan gum | 0.16 |
| A preservative such as benzoisothiazolinone | 0.15 |
| Water | rest |

Blend together the s-Metolachlor EW, propylene glycol, the non-ionic surfactant, the block copolymer and some of the water. Add the mesotrione millbase and blend. Add the xanthan gum and preservative and blend until uniform. Assay and trim with water if needed.

### EXAMPLE 2

### 2.1 Preparation of Premixes

### 2.1.1 Preparation of S-metolachlor EW

| | % wt |
|---|---|
| S-metolachlor *[(b)(i)]* | 66.67 |
| A herbicidal antidote such as benoxacor | 3.33 |
| A polymer such as Polystyrene *[(b)(ii)]* | 3.68 |
| A block copolymer such as Pluronic F108 *[(a)(i)]* | 1.00 |
| Silicone antifoaming agent | 0.18 |
| Water | 25.14 |

The polystyrene and benoxacor are dissolved in the s-Metolachlor.

The Pluronic F108 is dissolved in the aqueous phase and the antifoam is added. The two are combined in such a way as to form an emulsified organic phase with a particle size of 1 - 40 microns.

### 2.1.2 Preparation of Mesotrione Millbase

| | % wt |
|---|---|
| Mesotrione *[(c)(i)]* | 35.00 |
| A non-ionic surfactant such as Tristyryl phenol with 25 moles of EO *[(a)(ii)]* | 3.50 |
| Acetic acid (56%) | 11.01 |
| Copper hydroxide (100%) *[(c)(ii)]* | 5.00 |
| Silicone antifoaming agent | 0.10 |
| Xanthan gum | 0.10 |
| Water | 45.29 |

Mix together the water, acetic acid and copper hydroxide. Add the mesotrione. The non-ionic surfactant, antifoaming agent, and xanthan gum are added and mixed until uniform. Mill until the median particle size is 1- 6 microns.

### 2.2 Preparation of Final Product

| | % wt |
|---|---|
| S-Metolachlor EW | 55.20 |
| Mesotrione millbase | 10.50 |
| Propylene glycol | 3.00 |
| A non-ionic surfactant such as a C₉-C₁₁ alkylpolyglycoside *[(a)(ii)]* | 5.00 |
| A block copolymer such as a butyl PO/EO surfactant *[(a)(i)]* | 6.00 |
| Xanthan gum | 0.16 |
| A preservative such as benzoisothiazolinone | 0.15 |
| Water | rest |

Blend together the s-Metolachlor EW, propylene glycol, the non-ionic surfactant, the block copolymer and some of the water. Add the mesotrione millbase and blend. Add the xanthan gum and preservative and blend until uniform. Assay and trim with water if needed.

### EXAMPLE 3

### 3.1 Preparation of Premixes

### 3.1.1 Preparation of S-metolachlor EW

| | % wt |
|---|---|
| S-metolachlor *[(b)(i)]* | 66.67 |
| A herbicidal antidote such as benoxacor | 3.33 |
| A polymer such as Polystyrene *[(b)(ii)]* | 2.12 |
| A block copolymer such as Pluronic F68 *[(a)(i)]* | 1.50 |
| Silicone antifoaming agent | 0.18 |
| Water | 26.20 |

The polystyrene and benoxacor are dissolved in the s-Metolachlor.

The Pluronic F68 is dissolved in the aqueous phase and the antifoam is added. The two are combined in such a way as to form an emulsified organic phase with a particle size of 1 - 40 microns.

### 3.1.2 Preparation of Mesotrione Millbase

| | % wt |
|---|---|
| Mesotrione *[(c)(i)]* | 35.00 |
| A non-ionic surfactant such as Tristyryl phenol with 40 moles of EO *[(a)(ii)]* | 2.89 |
| Acetic acid (56%) | 11.01 |
| Copper hydroxide (100%) *[(c)(ii)]* | 5.00 |
| Silicone antifoaming agent | 0.10 |
| Xanthan gum | 0.10 |
| Water | 45.90 |

Mix together the water, acetic acid and copper hydroxide. Add the mesotrione. The non-ionic surfactant, antifoaming agent, and xanthan gum are added and mixed until uniform. Mill until the median particle size is 1- 6 microns.

### 3.2 Preparation of Final Product

| | % wt |
|---|---|
| S-Metolachlor EW | 55.20 |
| Mesotrione millbase | 10.50 |
| Glycerin | 3.00 |
| A non-ionic surfactant such as a C₉-C₁₁ alkylpolyglycoside *[(a)(ii)].* | 7.00 |
| A block copolymer such as a butyl PO/EO surfactant *[(a)(i)]* | 3.00 |
| Xanthan gum | 0.16 |
| A preservative such as benzoisothiazolinone | 0.15 |
| Water | rest |

Blend together the s-Metolachlor EW, propylene glycol, the non-ionic surfactant, the block copolymer and some of the water. Add the mesotrione millbase and blend. Add the xanthan gum and preservative and blend until uniform. Assay and trim with water if needed.

### EXAMPLE 4

### 4.1 Preparation of Premixes

### 4.1.1 s-Metolachlor EW (see 3.1.1)

### 4.1.2 Atrazine Millbase

| | % wt |
|---|---|
| Atrazine Technical (100%) | 57.80 |
| A non-ionic surfactant such as an alkyl ethoxylate with 4 to 8 moles of EO *[(a)(ii)]* | 0.58 |
| An EO/PO/EO block copolymer such as Pluronic P38 *[(a)(i)]* | 1.56 |
| Glycerine | 4.50 |
| Silicone antifoaming agent | 0.12 |
| Xanthan gum A preservative such as | 0.05 |
| benzoisothiazolinone | 0.05 |
| Water | rest |

Mix together the surfactants, ethylene glycol and water until uniform. Add antifoaming agent and Atrazine and mix. Grind slurry to a particle size of 95% less than 17 microns. Add the xanthan gum and preservative and mix until homogeneous.

### 4.1.3 Preparation of Mesotrione Millbase (see 3.1.2)

### 4.2 Preparation of Final Formulation

| | % wt |
|---|---|
| s-Metolachlor EW | 44.1 |
| Glycerin | 4.00 |
| A non-ionic surfactant such as a C₉-C₁₁ alkylpolyglycoside *[(a)(ii)]* | 4.50 |
| A block copolymer such as a butyl PO/EO surfactant *[(a)(i)]* | 4.50 |
| Mesotrione Millbase | 8.4 |
| Atrazine Basemix | 19.0 |
| Xanthan gum | 0.9 |
| A preservative such as Benzoisothiazolinone | 0.9 |
| Water | rest |

Blend together the s-Metolachlor EW, water, propylene glycol and surfactants until uniform. Add the mesotrione millbase and mix. Add the Atrazine Basemix followed by the xanthan gum and preservative and mix until uniform.

### EXAMPLE 5

### 5.1 Preparation of Premixes

### 5.1.1 Preparation of S-metolachlor EW (see 2.1.1)

### 5.1.2 Atrazine Millbase

| | % wt |
|---|---|
| Atrazine Technical (100%) | 57.80 |
| A non-ionic surfactant such as an alkyl ethoxylate with 4 to 8 moles of EO *[(a)(ii)]* | 1.15 |
| An EO/PO/EO block copolymer such as Pluronic P65 *[(a)(i)]* | 0.70 |
| Ethylene Glycol | 3.00 |
| Silicone antifoaming agent | 0.12 |
| Xanthan gum | 0.05 |
| A preservative such as benzoisothiazolinone | 0.05 |
| Water | rest |

Mix together the surfactants, ethylene glycol and water until uniform. Add antifoaming agent and Atrazine and mix. Grind slurry to a particle size of 95% less than 17 microns. Add the xanthan gum and preservative and mix until homogeneous.

### 5.1.3 Preparation of Mesotrione Millbase (see 2.1.2)

### 5.2 Preparation of Final Formulation

| | % wt |
|---|---|
| s-Metolachlor EW | 44.1 |
| Propylene glycol | 5.00 |
| A non-ionic surfactant such as a C₉-C₁₁ alkylpolyglycoside *[(a)(ii)]* | 4.00 |
| A block copolymer such as a butyl PO/EO surfactant *[(a)(i)]* | 5.00 |
| Mesotrione Millbase | 8.4 |
| Atrazine Basemix | 19.0 |
| Xanthan gum | 0.9 |
| A preservative such as Benzoisothiazolinone | 0.9 |
| Water | rest |

Blend together the s-Metolachlor EW, water, propylene glycol and surfactants until uniform. Add the mesotrione millbase and mix. Add the Atrazine Basemix followed by the xanthan gum and preservative and mix until uniform.

### EXAMPLE 6

### 6.1 Preparation of Premixes

### 6.1.1 s-Metolachlor EW (see 3.1.1)

### 6.1.2 Atrazine Millbase

| | % wt |
|---|---|
| Atrazine Technical (100%) | 57.80 |
| A non-ionic surfactant such as an alkyl ethoxylate with 4 to 8 moles of EO *[(a)(ii)]* | 1.69 |
| An EO/PO/EO block copolymer such as Pluronic P38 *[(a)(i)]* | 0.40 |
| Ethylene Glycol | 3.00 |
| Silicone antifoaming agent | 0.12 |
| Xanthan gum | 0.05 |
| A preservative such as benzoisothiazolinone | 0.05 |
| Water | rest |

Mix together the surfactants, ethylene glycol and water until uniform. Add antifoaming agent and Atrazine and mix. Grind slurry to a particle size of 95% less than 17 microns. Add the xanthan gum and preservative and mix until homogeneous.

### 6.1.3. Preparation of Mesotrione Millbase (see 1.1.2)

### 6.2 Preparation of Final Formulation

| | % wt |
|---|---|
| s-Metolachlor EW | 44.1 |
| Glycerin | 5.00 |
| A non-ionic surfactant such as a C₉-C₁₁ alkylpolyglycoside *[(a)(ii)]* | 3.00 |
| A block copolymer such as a butyl PO/EO surfactant *[(a)(i)]* | 6.00 |
| Mesotrione Millbase | 8.4 |
| Atrazine Basemix | 19.0 |
| Xanthan gum | 0.9 |
| A preservative such as Benzoisothiazolinone | 0.9 |
| Water | rest |

Blend together the sMetolachlor EW, water, propylene glycol and surfactants until uniform. Add the mesotrione millbase and mix. Add the Atrazine Basemix followed by the xanthan gum and preservative and mix until uniform.

### EXAMPLE 7

### 7.1 Preparation of Premixes

### 7.1.1 Metolachlor EW

| | % wt |
|---|---|
| Metolachlor *[(b)(i)]* | 66.67 |
| A herbicidal antidote such as benoxacor | 3.33 |
| A polymer such as Polystyrene *[(b)(ii)]* | 4.18 |
| A block copolymer such as Pluronic F108 *[(a)(i)]* | 1.87 |
| Silicone antifoaming agent | 0.18 |
| Water | 23.77 |

The polystyrene and benoxacor are dissolved in the Metolachlor.

The Pluronic F108 is dissolved in the aqueous phase and the antifoam is added. The two are combined in such a way as to form an emulsified organic phase with a particle size of 1 - 40 microns.

### 7.1.2 Atrazine Millbase (see 6.1.2)

### 7.1.3 Preparation of Mesotrione Millbase (see 1.1.2)

### 7.2 Preparation of Final Formulation

| | % wt |
|---|---|
| Metolachlor EW | 44.1 |
| Glycerin | 5.00 |
| A non-ionic surfactant such as a C₉-C₁₁ alkylpolyglycoside *[(a)(ii)]* | 3.00 |
| A block copolymer such as a butyl PO/EO surfactant *[(a)(i)]* | 6.00 |
| Mesotrione Millbase | 8.4 |
| Atrazine Basemix | 19.0 |
| Xanthan gum | 0.9 |
| A preservative such as Benzoisothiazolinone | 0.9 |
| Water | rest |

Blend together the Metolachlor EW, water, propylene glycol and surfactants until uniform. Add the mesotrione millbase and mix. Add the Atrazine Basemix followed by the xanthan gum and preservative and mix until uniform.

## Claims

1. A suspoemulsion formulation comprising:
(a) a continuous phase comprising
(i) one or more block co-polymers selected from the group consisting of alkyleneoxide copolymers, C₂₋₆ alkyl adducts of ethylene oxide-propylene oxide block copolymers, C₂₋₆ alkyl adducts of ethylene oxide-butylene oxide block copolymers, and polyoxyethylene-polyoxypropylene monoalkylethers, and
(ii) one or more non-ionic surfactants selected from the group consisting of EO-PO block co-polymers, butoxy block copolymers, graft comb polymers, polyethylene glycol mono and diesters, polyglyceryl alcohol ethers, alkyl ethoxylates, tristyryl ethoxylates, alkyl aryl ethoxylates and alkylpolyglycosides;
(b) a dispersed emulsion phase comprising
(i) a chloroacetamide, and
(ii) a polymeric stabiliser having a molecular weight between 10,000 and 1,000,000 daltons and selected from the group consisting of polypropylene, polyisobutylene, polyisoprene, copolymers of monoolefins and diolefins, polyacrylate, polystyrene, polyvinyl acetate, polyurethanes and polyamides; and
(c) a dispersed solid phase comprising
(i) a 2-(substituted benzoyl)-1,3-cyclohexanedione herbicide; and
(ii) a stabilising metal salt.

2. A suspoemulsion formulation according to claim 1, which further comprises one or more additional active ingredients.

3. A suspoemulsion formulation according to claim 2, wherein the additional active ingredient is a herbicide.

4. A suspoemulsion formulation according to claim 2, wherein the additional active ingredient is a safener or antidote compound.

5. A suspoemulsion formulation according to claim 2, wherein the additional active ingredient comprises a herbicide and a safener or antidote compound.

6. A suspoemulsion formulation according to any one of claims 1 to 5, wherein the continuous phase is selected from the groups consisting of water, glycol or alcohol.

7. A suspoemulsion formulation according to claim 6, wherein the continuous phase is water.

8. A suspoemulsion formulation according to any one of claims 1 to 7, wherein the chloroacetamide is a compound of formula (I) 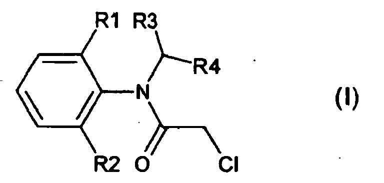 wherein R¹ is hydrogen, methyl or ethyl; R² is hydrogen or ethyl; R³ is hydrogen or methyl; and R⁴ is methyl, methoxy, methoxymethyl, ethoxy, or butoxy.

9. A suspoemulsion formulation according to claim 8, wherein the chloroacetamide is selected from the group consisting of metolachlor, acetochlor and alachlor.

10. A suspoemulsion formulation according to claim 9, wherein the chloroacetamide is s-metolachlor.

11. A suspoemulsion formulation according to any one of claim 1 to 10, wherein the 2-(substituted benzoyl)-1,3-cyclohexanedione compound is a compound of formula (II) 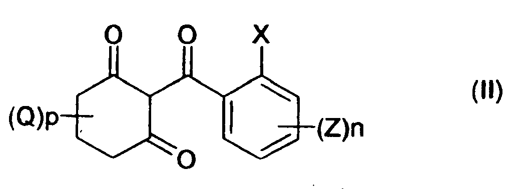
wherein X represents a halogen atom; a straight- or branched-chain alkyl or alkoxy group containing up to six carbon atoms which is optionally substituted by one or more groups -OR⁵ or one or more halogen atoms; or a group selected from nitro, cyano, -CO₂R⁶, -S(O)ₘR⁵, -O(CH₂)ᵣOR⁵, -COR⁶, -NR⁶R⁷, -SO₂NR⁶R⁷, -CONR⁶R⁷,-CSNR⁶R⁷ and -OSO₂R⁸;
R⁵ represents a straight- or branched-chain alkyl group containing up to six carbon atoms which is optionally substituted by one or more halogen atoms;
R⁶ and R⁷ each independently represents a hydrogen atom; or a straight- or branched-chain alkyl group containing up to six carbon atoms which is optionally substituted by one or more halogen atoms;
R⁸ represents a straight-or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)ₘR⁹, OS(O)ₘR⁹, C₁₋₆ alkyl, C₁₋₆alkoxy, C₁₋₆ haloalkyl, C₁₋₆ haloalkoxy, carboxy, C₁₋₆ alkylcarbonyloxy, C₁₋₆ alkoxycarbonyl, C₁₋₆ alkylcarbonyl, amino, C₁₋₆ alkylamino, C₁₋₆ dialkylamino having independently the stated number of carbon atoms in each alkyl group, C₁₋₆ alkylcarbonylamino, C₁₋₆ alkoxycarbonylamino, C₁₋₆ alkylaminocarbonylamino, C₁₋₆ dialkylaminocarbonylamino having independently the stated number of carbon atoms in each alkyl group, C₁₋₆ alkoxycarbonyloxy, C₁₋₆ alkylaminocarbonyloxy, C₁₋₆ dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R⁹ represents methyl, cyano, -COR¹⁰, -CO₂R¹⁰ or -S(O)ₘR¹¹;
R¹⁰ represents hydrogen or straight- or branched-chain alkyl group containing up to six carbon atoms;
R¹¹ represents C₁₋₆ alkyl, C₁₋₆ haloalkyl, C₁₋₆ cyanoalkyl, C₃₋₈ cycloalkyl optionally substituted with halogen, cyano or C₁₋₄ alkyl; or phenyl optionally substituted with one to three of the same or different halogen, nitro, cyano, C₁₋₄ haloalkyl, C₁₋₄ alkyl, C₁₋₄ alkoxy or -S(O)ₘR¹²;
R¹² represents C₁₋₄ alkyl;
each Q independently represents C₁₋₄ alkyl or -CO₂R¹³ wherein R¹³ is C₁₋₄ alkyl;
m is zero, one or two;
n is zero or an integer from one to four;
r is one, two or three; and
p is zero or an integer from one to six.

12. A suspoemulsion formulation according to claim any one of claims 1 to 10, wherein the 2-(substituted benzoyl)-1,3-cyclohexanedione of formula (II) is selected from the group consisting of 2-(2'-nitro-4'-methylsulphonylbenzoyl)-1,3-cyclohexanedione, 2-(2'-nitro-4'-methylsulphonyloxybenzoyl)-1,3-cyclohexanedione, 2-(2'-chloro-4'-methylsulphonylbenzoyl)-1,3-cyclohexanedione, 4,4-dimethyl-2-(4-methanesulphonyl-2-nitrobenzoyl)-1,3-cyclohexanedione, 2=(2-chloro-3-ethoxy-4-methanesulphonylbenzoyl)-5-methyl-1,3-cyclohexanedione and 2-(2-chloro-3-ethoxy-4-ethanesulphonylberizoyl)-5-methyl-1,3-cyclohexanedione.

13. A suspoemulsion formulation according to claim 12, wherein the 2-(substituted benzoyl)-1,3-cyclohexanedione is 2-(2'-nitro-4'-methylsulphonylbenzoyl)-1,3-cyclohexanedione.

14. A suspoemulsion formulation according to any one of claims 1 to 13, wherein the stabilizing metal salt is selected from the group consisting of calcium, beryllium, barium, titanium, magnesium, zinc, iron, cobalt, nickel and copper salts.

15. A suspoemulsion formulation according to claim 14, wherein the stabilizing metal salt is selected from the group consisting of magnesium, manganese, zinc, iron, cobalt, nickel and copper salts.

16. A suspoemulsion formulation according to claim 15, wherein the stabilizing metal salt is a copper salt.

17. A method for controlling the growth of undesirable vegetation, said method comprising applying a formulation as claimed in claim 1 to 16 to the locus of such vegetation.

18. Use of a suspoemulsion formulation as claimed in any one of claims 1 to 16 for the control of the growth of undesirable vegetation.

## Patentansprüche

1. Suspoemulsionsformulierung, umfassend:
(a) eine kontinuierliche Phase, umfassend
(i) ein oder mehrere Blockcopolymere, ausgewählt aus der Gruppe, bestehend aus Alkylenoxidcopolymeren, C₂₋₆-Alkyladdukten von Ethylenoxid-Propylenoxid-Blockcopolymeren, C₂₋₆-Alkyladdukten von Ethylenoxid-Butylenoxid-Blockcopolymeren und Polyoxyethylen-Polyoxypropylen-Monoalkylethern, und
(ii) ein oder mehrere nichtionische Tenside, ausgewählt aus der Gruppe, bestehend aus EO-PO-Blockcopolymeren, Butoxyblockcopolymeren, Pfropfkammpolymeren, Polyethylenglykolmono- und -diestern, Polyglycerylalkoholethern, Alkylethoxylaten, Tristyrylethoxylaten, Alkylarylethoxylaten und Alkylpolyglycosiden;
(b) eine dispergierte Emulsionsphase, umfassend
(i) ein Chloracetamid und
(ii) einen polymeren Stabilisator mit einem Molekulargewicht zwischen 10 000 und 1 000 000 Dalton und ausgewählt aus der Gruppe, bestehend aus Polypropylen, Polyisobutylen, Polyisopren, Copolymeren von Monoolefinen und Diolefinen, Polyacrylat, Polystyrol, Polyvinylacetat, Polyurethanen und Polyamiden, und
(c) eine dispergierte feste Phase, umfassend
(i) ein 2-(substituiertes Benzoyl)-1,3-cyclohexandionherbizid und
(ii) ein stabilisierendes Metallsalz.

2. Suspoemulsionsformulierung nach Anspruch 1, die weiterhin einen oder mehrere zusätzliche Wirkbestandteile umfasst.

3. Suspoemulsionsformulierung nach Anspruch 2, worin der zusätzliche Wirkbestandteil ein Herbizid ist.

4. Suspoemulsionsformulierung nach Anspruch 2, worin der zusätzliche Wirkbestandteil eine Safener- oder Antidotverbindung ist.

5. Suspoemulsionsformulierung nach Anspruch 2, worin der zusätzliche Wirkbestandteil ein Herbizid und eine Safener- oder Antidotverbindung umfasst.

6. Suspoemulsionsformulierung nach einem der Ansprüche 1 bis 5, worin die kontinuierliche Phase aus den Gruppen, bestehend aus Wasser, Glykol oder Alkohol, ausgewählt ist.

7. Suspoemulsionsformulierung nach Anspruch 6, worin die kontinuierliche Phase Wasser ist.

8. Suspoemulsionsformulierung nach einem der Ansprüche 1 bis 7, worin das Chloracetamid eine Verbindung der Formel (I) 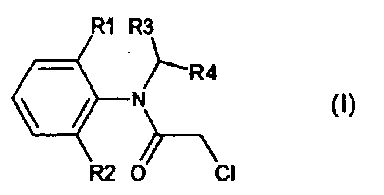 darstellt, worin R¹ Wasserstoff, Methyl oder Ethyl darstellt; R² Wasserstoff oder Ethyl darstellt; R³ Wasserstoff oder Methyl darstellt; und R⁴ Methyl, Methoxy, Methoxymethyl, Ethoxy oder Butoxy darstellt.

9. Suspoemulsionsformulierung nach Anspruch 8, worin das Chloracetamid aus der Gruppe, bestehend aus Metolachlor, Acetochlor und Alachlor, ausgewählt ist.

10. Suspoemulsionsformulierung nach Anspruch 9, worin das Chloracetamid s-Metolachlor ist.

11. Suspoemulsionsformulierung nach einem der Ansprüche 1 bis 10, worin die 2-(substituierte Benzoyl)-1,3-cyclohexan-dionverbindung eine Verbindung der Formel (II) 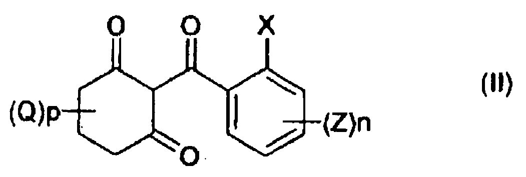 darstellt, worin
X ein Halogenatom; eine gerad- oder verzweigtkettige Alkyl- oder Alkoxygruppe, die bis zu 6 Kohlenstoffatome enthält, die gegebenenfalls mit einer oder mehreren Gruppen -OR⁵ oder einem oder mehreren Halogenatomen substituiert ist; oder eine Gruppe, ausgewählt aus Nitro, Cyano, -CO₂R⁶, -S(O)ₘR⁵, -O (CH₂)ᵣOR⁵, -COR⁶, -NR⁶R⁷, -SO₂NR⁶R⁷, -CONR⁶R⁷, -CSNR⁶R⁷ und -OSO₂R⁸, darstellt;
R⁵ eine gerad- oder verzweigtkettige Alkylgruppe; die bis zu 6 Kohlenstoffatome enthält, die gegebenenfalls mit einem oder mehreren Halogenatomen substituiert ist, wiedergibt;
R⁶ und R⁷ jeweils unabhängig ein Wasserstoffatom oder eine gerad- oder verzweigtkettige Alkylgruppe, die bis zu 6 Kohlenstoffatome enthält, die gegebenenfalls mit einem oder mehreren Halogenatomen substituiert ist, wiedergeben;
R⁸ eine gerad- oder verzweigtkettige Alkyl-, Alkenyl- oder Alkinylgruppe, die bis zu 6 Kohlenstoffatome enthält, gegebenenfalls substituiert mit einem oder mehreren Halogenatomen, oder eine Cycloalkylgruppe, die 3 bis 6 Kohlenstoffatome enthält, wiedergibt;
jedes Z unabhängig Halogen, Nitro, Cyano, S(O)ₘR⁹, OS(O)ₘR⁹, C₁₋₆-Alkyl, C₁₋₆-Alkoxy, C₁₋₆-Halogenalkyl, C₁₋₆-Halogenalkoxy, Carboxy, C₁₋₆-Alkylcarbonyloxy, C₁₋₆-Alkoxycarbonyl, C₁₋₆-Alkylcarbonyl, Amino, C₁₋₆-Alkylamino, C₁₋₆-Dialkylamino, unabhängig mit der ausgewiesenen Anzahl an Kohlenstoffatomen in jeder Alkylgruppe, C₁₋₆-Alkylcarbonylamino, C₁₋₆-Alkoxycarbonylamino, C₁₋₆-Alkylaminocarbonylamino, C₁₋₆-Dialkylaminocarbonylamino, unabhängig mit der ausgewiesenen Anzahl an Kohlenstoffatomen in jeder Alkylgruppe, C₁₋₆-Alkoxycarbonyloxy, C₁₋₆-Alkylaminocarbonyloxy, C₁₋₆-Dialkylcarbonyloxy, Phenylcarbonyl, substituiertes Phenylcarbonyl, Phenylcarbonyloxy, substituiertes Phenylcarbonyloxy, Phenylcarbonylamino, substituiertes Phenylcarbonylamino, Phenoxy oder substituiertes Phenoxy wiedergibt;
R⁹ Methyl, Cyano, -COR¹⁰, -CO₂R¹⁰ oder -S(O)ₘR¹¹ wiedergibt;
R¹⁰ Wasserstoff oder gerad- oder verzweigtkettige Alkylgruppe, die bis zu 6 Kohlenstoffatome enthält, wiedergibt;
R¹¹ C₁₋₆-Alkyl, C₁₋₆-Halogenalkyl, C₁₋₆-Cyanoalkyl, C₃₋₈-Cycloalkyl, gegebenenfalls substituiert mit Halogen, Cyano oder C₁₋₄-Alkyl; oder Phenyl, gegebenenfalls substituiert mit 1 bis 3 der gleichen oder verschiedenen Halogen, Nitro, Cyano, C₁₋₄-Halogenalkyl, C₁₋₄-Alkyl, C₁₋₄-Alkoxy oder -S(O)ₘR¹², wiedergibt;
R¹² C₁₋₄-Alkyl wiedergibt;
jedes Q unabhängig C₁₋₄-Alkyl oder -CO₂R¹³, worin R¹³ C₁₋₄-Alkyl darstellt, wiedergibt;
m 0, 1 oder 2 ist;
n 0 oder eine ganze Zahl von 1 bis 4 ist;
r 1, 2 oder 3 ist; und
p 0 oder eine ganze Zahl von 1 bis 6 ist.

12. Suspoemulsionsformulierung nach einem der Ansprüche 1 bis 10, worin das 2-(substituierte Benzoyl)-1,3-cyclohexandion der Formel (II) aus der Gruppe, bestehend aus 2-(2'-Nitro-4'-methylsulfonylbenzoyl)-1,3-cyclohexandion, 2-(2'-Nitro-4'-methylsulfonyloxybenzoyl)-1,3-cyclohexandion, 2-(2'-Chlor-4'-methylsulfonylbenzoyl)-1,3-cyclohexandion, 4,4-Dimethyl-2-(4-methansulfonyl-2-nitrobenzoyl)-1,3-cyclohexandion, 2-(2-Chlor-3-ethoxy-4-methansulfonylbenzoyl)-5-methyl-1,3-cyclohexandion und 2-(2-Chlor-3-ethoxy-4-ethansulfonylbenzoyl)-5-methyl-1,3-cyclohexandion, ausgewählt ist.

13. Suspoemulsionsformulierung nach Anspruch 12, worin das 2-(substituierte Benzoyl)-1,3-cyclohexandion 2-(2'-Nitro-4'-methylsulfonylbenzoyl)-1,3-cyclohexandion ist.

14. Suspoemulsionsformulierung nach einem der Ansprüche 1 bis 13, worin das stabilisierende Metallsalz aus der Gruppe, bestehend aus Calcium-, Beryllium-, Barium-, Titan-, Magnesium-, Zink-, Eisen-, Kobalt-, Nickel- und Kupfersalzen, ausgewählt ist.

15. Suspoemulsionsformulierung nach Anspruch 14, worin das stabilisierende Metallsalz aus der Gruppe, bestehend aus Magnesium-, Mangan-, Zink-, Eisen-, Kobalt-, Nickel- und Kupfersalzen, ausgewählt ist.

16. Suspoemulsionsformulierung nach Anspruch 15, worin das stabilisierende Metallsalz ein Kupfersalz ist.

17. Verfahren zum Bekämpfen des Wachstums von unerwünschter Vegetation, wobei das Verfahren Applizieren einer Formulierung, nach Anspruch 1 bis 16 auf den Standort solcher Vegetation umfasst.

18. Verwendung einer Suspoemulsionsformulierung nach einem der Ansprüche 1 bis 16 für die Bekämpfung des Wachstums von unerwünschter Vegetation.

## Revendications

1. Formulation de suspoémulsion comprenant :
(a) une phase continue comprenant
(i) un ou plusieurs copolymères séquencés choisis dans le groupe constitué par des copolymères d'oxyde d'alkylène, des adduits d'alkyle en C_{2 à 6} de copolymères séquencés d'oxyde d'éthylène-oxyde de propylène, des adduits d'alkyle en C_{2 à 6} de copolymères séquencés d'oxyde d'éthylène-oxyde de butylène et des poly(oxyéthylène-oxypropylène monoalkyléthers), et
(ii) un ou plusieurs agents tensioactifs non ioniques choisis dans le groupe constitué par des copolymères séquencés EO-PO, des copolymères séquencés butoxy, des polymères peignes greffés, des poly(éthylène glycol mono- et diesters), des poly(éthers d'alcool glycérylique), des éthoxylates d'alkyle, des éthoxylates de tristyryle, des éthoxylates d'alkyl aryle et des poly(alkylglycosides) ;
(b) une phase d'émulsion dispersée comprenant
(i) un chloroacétamide, et
(ii) un stabilisant polymère ayant une masse moléculaire comprise entre 10 000 et 1 000 000 daltons et choisi dans le groupe constitué par le poly(propylène), le poly(isobutylène), le poly(isoprène), des copolymères de monooléfines et de dioléfines, le poly(acrylate), le poly(styrène), l'acétate de poly(vinyle), les poly(uréthanes) et les poly(amides) ; et
(c) une phase solide dispersée comprenant
(i) un herbicide de 2-(benzoyl substitué)-1,3-cyclohexanedione ; et
(ii) un sel de métal stabilisant.

2. Formulation de suspoémulsion selon la revendication 1, qui comprend en outre un ou plusieurs ingrédients actifs additionnels.

3. Formulation de suspoémulsion selon la revendication 2, dans laquelle l'ingrédient actif additionnel est un herbicide.

4. Formulation de suspoémulsion selon la revendication 2, dans laquelle l'ingrédient actif additionnel est un composé phytoprotecteur ou un composé antidote.

5. Formulation de suspoémulsion selon la revendication 2, dans laquelle l'ingrédient actif additionnel comprend un herbicide et un composé phytoprotecteur ou un composé antidote.

6. Formulation de suspoémulsion selon l'une quelconque des revendications 1 à 5, dans laquelle la phase continue est choisie dans les groupes constitués par l'eau, un glycol ou un alcool.

7. Formulation de suspoémulsion selon la revendication 6, dans laquelle la phase continue est l'eau.

8. Formulation de suspoémulsion selon l'une quelconque des revendications 1 à 7, dans laquelle le chloroacétamide est un composé de formule (I) 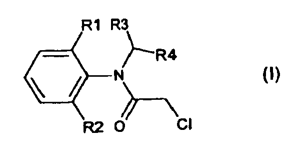 dans laquelle R¹ est un atome d'hydrogène, un groupe méthyle ou éthyle ; R² est un atome d'hydrogène ou un groupe éthyle ; R³ est un atome d'hydrogène ou un groupe méthyle ; et R⁴ est un groupe méthyle, méthoxy, méthoxyméthyle, éthoxy, ou butoxy.

9. Formulation de suspoémulsion selon la revendication 8, dans laquelle le chloroacétamide est choisi dans le groupe constitué par le métolachlore, l'acétochlore et l'alachlore.

10. Formulation de suspoémulsion selon la revendication 9, dans laquelle le chloroacétamide est le s-métolachlore.

11. Formulation de suspoémulsion selon l'une quelconque des revendications 1 à 10, dans laquelle le composé de 2-(benzoyl substitué)-1,3-cyclohexanedione est un composé de formule (II) 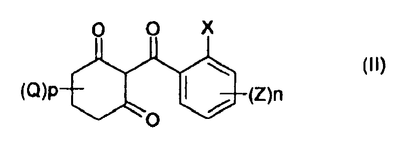 dans laquelle
X représente un atome d'halogène ; un groupe alkyle ou alcoxy à chaîne linéaire ou ramifiée contenant jusqu'à six atomes de carbone qui est facultativement substitué par un ou plusieurs groupes -OR⁵ ou un ou plusieurs atomes d'halogène ; ou un groupe choisi parmi un groupe nitro, cyano, -CO₂R⁶, -S(O)ₘR⁵, -O(CH₂)ᵣOR⁵, -COR⁶, -NR⁶R⁷, -SO₂NR⁶R⁷, -CONR⁶R⁷, CSNR⁶R⁷ et -OSO₂R⁸;
R⁵ représente un groupe alkyle à chaîne linéaire ou ramifiée contenant jusqu'à six atomes de carbone qui est facultativement substitué par un ou plusieurs atomes d'halogène ;
R⁶ et R⁷ représentent chacun indépendamment un atome d'hydrogène ; ou un groupe alkyle à chaîne linéaire ou ramifiée contenant jusqu'à six atomes de carbone qui est facultativement substitué par un ou plusieurs atomes d'halogène ;
R⁸ représente un groupe alkyle, alcényle ou alcynyle à chaîne linéaire ou ramifiée contenant jusqu'à six atomes de carbone facultativement substitués par un ou plusieurs atomes d'halogène ; ou un groupe cycloalkyle contenant de trois à six atomes de carbone ;
chaque Z représente indépendamment un atome d'halogène, un groupe nitro, cyano, S(O)ₘR⁹, OS(O)ₘR⁹, alkyle en C_{1 à 6}, alcoxy en C₁ à ₆, halégonoalkyle en C_{1 à 6}, halogénoalcoxy en C_{1 à 6}, carboxy, alkylcarbonyloxy en C_{1 à 6}, alcoxycarbonyle en C_{1 à 6}, alkylcarbonyle en C_{1 à 6}, amino, alkylamino en C_{1 à} 6, dialkylamino en C_{1 à 6} ayant indépendamment le nombre d'atomes de carbone indiqué dans chaque groupe alkyle, alkylcarbonylamino en C_{1 à 6}, alcoxycarbonylamino en C_{1 à 6}, alkylaminocarbonylamino en C_{1 à 6}, dialkylaminocarbonylamino en C_{1 à 6} ayant indépendamment le nombre indiqué d'atomes de carbone dans chaque groupe alkyle, alcoxycarbonyloxy en C_{1 à 6}, alkylamonocarbonyloxy en C_{1 à 6}, dialkylcarbonyloxy en C_{1 à 6}, phénylcarbonyle, phénylcarbonyle substitué, phénylcarbonyloxy, phénylcarbonyloxy substitué, phénylcarbonylamino, phénylcarbonylamino substitué, phénoxy ou phénoxy substitué ;
R⁹ représente un groupe méthyle, cyano, -COR¹⁰, -CO₂R¹⁰ ou -S(O)ₘR¹¹,
R¹⁰ représente un atome d'hydrogène ou un groupe alkyle à chaîne linéaire ou ramifiée contenant jusqu'à six atomes de carbone ;
R¹¹ représente un groupe alkyle en C_{1 à 6}, halégonoalkyle en C_{1 à 6}, cyanoalkyle C_{1 à 6}, cycloalkyle en C_{3 à 8} facultativement substitué par un atome d'halogène, un groupe cyano ou alkyle en C_{1 à 4} ; ou un groupe phényle facultativement substitué par un à trois de ces mêmes groupes ou par un atome d'halogène, un groupe nitro, cyano, halégonoalkyle en C_{1 à 4}, alkyle en C_{1 à 4}, alcoxy en C_{1 à 4} ou -S(O)ₘR¹² différent ;
R¹² représente un groupe alkyle en C_{1 à 4} ;
chaque Q représente indépendamment un groupe alkyle en C_{1 à 4} ou -CO₂R¹³, dans lequel R¹³ est un groupe alkyle en C_{1 à 4};
m vaut zéro, un ou deux ;
n vaut zéro ou un nombre entier de un à quatre;
r vaut un, deux ou trois ; et
p vaut zéro ou un nombre entier de un à six.

12. Formulation de suspoémulsion selon l'une quelconque des revendications 1 à 10, dans laquelle la 2-(benzoyl substitué)-1,3-cyclohexanedione de formule (II) est choisie dans le groupe constitué par la 2-(2'-nitro-4'-méthylsulphonylbenzoyl)-1,3-cyclohexanedione, la 2-(2'-nitro-4'-méthylsulfonyloxybenzoyl)-1,3-cyclohexanedione, la 2-(2'-chloro-4'-méthylsulfonylbenzoyl)-1,3-cyclohexanedione, la 4,4-diméthyl-2-(4-méthànesulfonyl-2-nitrobenzoyl)-1,3-cyclohexanedione, la 2-(2-chloro-3-éthoxy-4-méthanesulfonylbenzoyl)-5-méthyl-1,3-cyclohexanedione et la 2-(2-chloro-3-éthoxy-4-éthanesulfonylbenzoyl)-5-méthyl-1,3-cyclohexanedione.

13. Formulation de suspoémulsion selon la revendication 12, dans laquelle la 2-(benzoyl substitué)-1,3-cyclohexanedione est la 2-(2'-nitro-4'-méthylsulfonylbenzoyl)-1,3-cyclohexanedione.

14. Formulation de suspoémulsion selon l'une quelconque des revendications 1 à 13, dans laquelle le sel de métal stabilisant est choisi dans le groupe constitué par les sels de calcium, de béryllium, de baryum, de titane, de magnésium, de zinc, de fer, de cobalt, de nickel et de cuivre.

15. Formulation de suspoémulsion selon la revendication 14, dans laquelle le sel de métal stabilisant est choisi dans le groupe constitué par les sels de magnésium, de manganèse, de zinc, de fer, de cobalt, de nickel et de cuivre.

16. Formulation de suspoémulsion selon la revendication 15, dans laquelle le sel de métal stabilisant est un sel de cuivre.

17. Procédé de régulation de la croissance de végétation non souhaitable, ledit procédé comprenant l'application d'une formulation selon les revendications 1 à 16 au locus d'une telle végétation.

18. Utilisation d'une formulation de suspoémulsion selon l'une quelconque des revendications 1 à 16, pour la régulation de la croissance de végétation non souhaitable.
